# EUROPÄISCHE PATENTANMELDUNG

(11) **EP 0 656 255 A1**
(43) Veröffentlichungstag der Anmeldung: **07.06.1995**
(21) Anmeldenummer: 94118743.7
(22) Anmeldetag: 29.11.1994
(51) Int. Cl.: B32B 15/01, A44C 21/00

(54) **Plattierte Münze und Verfahren zu ihrer Herstellung**

(30) Priorität: 03.12.1993 DE 4341226
(71) Anmelder: Krupp VDM GmbH, D-58791 Werdohl (DE)
(72) Erfinder: Dr.-Ing. Ulrich Heubner, D-58791 Werdohl (DE); Rinke, Horst, D-58513 Lüdenscheid (DE); Kolb-Telieps Dr.-Ing. Angelika, D-58509 Lüdenscheid (DE)
(74) Vertreter: Cohausz & Florack

(57) **Zusammenfassung**

Die Erfindung befaßt sich mit einem Verfahren zum Herstellen von Münzen, die im wesentlichen aus chromhaltigem Edelstahl bestehen, wobei dem Prägevorgang Münzrohlinge zugeführt werden, bei denen der Edelstahl, der eine 0,2 % - Dehngrenze von wenigstens 200 N/mm² aufweist, Kernschicht und beidseits mit einer Auflage aus Nichteisenmetall, das vorzugsweise zu 60 bis 100 % aus Kupfer besteht, versehen ist und dessen 0,2 % - Dehngrenze um mindestens 40 N/mm² unter der des Edelstahles liegt.

## Beschreibung

Die Erfindung betrifft eine plattierte Münze, die zu mindestens 80 Masse-% aus chromhaltigem Edelstahl mit ferritischer, austenitischer oder Duplex-Struktur besteht, und ein Verfahren zu ihrer Herstellung.

Die Erfindung geht aus von der bekannten Herstellung von Münzen unter Verwendung von aus Edelstahl bestehenden plattierten Münzrohlingen, nämlich Münzrohlingen aus einem Schichtverbundwerkstoff gemäß der DE 38 17 657 A1 mit einem ferritischen Chromstahlkern und einer beidseitigen höherwertigen austenitischen Chrom-Nickelstahlplattierung.

Die Münztechnik ist im allgemeinen konservativ und verläßt selten eingeführte Systeme. Früher hatten die einzelnen Münzen als Werteinneit in ihrem Gewicht den Wert des betreffenden Metalles. Das waren aie sogenannten Kurant-Münzen aus Kupfer, Silber, Gold und deren Legierungen. Der mit der Industrialisierung una der Intensivierung von Handel und Verkehr zunehmende Bedarf an Münzen wurde ab Mitte des 19. Jahrhunderts mehr und mehr durch Scheidemünzen gedeckt, bei denen der Metallwert im allgemeinen nur einen Bruchteil des Nenn- oder Prägewertes ausmachte. In den Bestrebungen, die klassischen Münzmetalle Gold und Silber durch andere Werkstoffe zu ersetzen, ist dabei vielfach versucht worden, die ursprüngliche Münzfarbe beizubehalten, wobei Nickel anstelle von Silber und bestimmte Kupferlegierungen an die Stelle von Gold getreten sind.

Bereits in Ullmann: "Enzyklopädie der technischen Chemie", Bd. 8, Urban & Schwarzenberg von 1920, findet man auf den S. 59 ff. Verfahren zur unterschiedlichen Plattierung von Kernwerkstoffen. Insbesondere auf der S. 71 ist auch das Plattieren von Kupfer-Zink- und Kupfer-Zink-Nickel-Legierungen mit Kupfer, Eisen und Stahl geschildert, was zumindestens von außen den Eindruck einer aus dem jeweiligen Plattierungsmaterial bestehenden Münze vermittelt.

Soll jedoch mit solchen Plattierungsverfahren eine besonders preiswerte Münze hergestellt werden, so liegt eine Möglichkeit darin, Bänder aus Kohlenstoffstahl beidseits mit höherwertigen Metallen durch Walzplattieren zu versehen, aus diesem Werkstoffverbund anschließend die Münzrohlinge auszustanzen und daraus dann Münzen zu prägen. Es war Rumänien, das zu Beginn der 1940er Jahre als erstes Land 100-Lei-Münzen aus derart mit Nickel plattiertem Stahl eingeführt hat. Die beidseitige Plattierdicke betrug dabei 3,5 % der Gesamtdicke. Das Stückgewicht war 8,5 g und der Durchmesser 28 mm. Als nächstes Land folgte mit der Einführung plattierter Münzen Bulgarien. Dort hatte man sich entschlossen, als Plattierung Kupfer-Nickel in der Legierung 80 % Kupfer und 20 % Nickel zu wählen.

Die Erfolge in den vorgenannten Ländern waren der Anlaß, daß im Jahre 1948 auch in Deutschland derart plattierte Münzen eingeführt worden sind, und zwar als 1-, 5- und 10-Pfg-Stücke, später auch als 2-Pfg-Stücke.

Münzen aus solcherart walzplattierten Werkstoffverbunden haben Kanten, an denen der Kern aus Kohlenstoffstahl ungeschützt zutage tritt. Der sich beim Stanzvorgang über diese Kanten ziehende dünne Film aus höherwertigem Plattiermetall geht zwar beim Gebrauch der Münzen durch Abrieb bald verloren, doch stellt dies in unserem gemäßigten Klima kein Problem dar. In tropischen Ländern dagegen tritt die Rostanfälligkeit in Erscheinung und führt zur Forderung auch nach einem Kantenschutz. Hierfür bietet sich gemäß DE 39 40 244 A1 die galvanische Abscheidung höherwertiger Metalle auf Münzrohlingen aus walzplattierten Werkstoffverbunden an.

Es kommt auch in Betracht, Münzrohlinge aus Kohlenstoffstahl zu stanzen und diese Mühzrohlinge auf dem Weg galvanischer Abscheidung mit einer Umhüllung zu versehen.

Die galvanische Behandlung von Münzrohlingen hat den Nachteil, daß sie mit den resultierenden Abwässern auf Umweltprobleme in besonderer Weise Rücksicht nehmen muß. Die galvanische Nachbehandlung von bereits walzplattierten Werkstoffverbunden stellt darüber hinaus einen besonderen Kostenfaktor dar, der sich bei einer Serie verschieden großer Münzen im umgekehrten Verhältnis zur Münzrohlinggröße noch verstärkt. Das Galvanisieren kleiner Münzen dauert unverhältnismäßig lange.

In dieser Entwicklungslinie entspricht die eingangs beschriebene Edelstahlmünze nach DE 38 17 657 A1 im bestimmungsgemäßen Gebrauch der Forderung nach erhöhter Korrosionsbeständigkeit und in der Herstellung gestattet sie den Einsatz der wirtschaftlichen und leistungsstarken Walzplattierung bei der Schaffung des Werkstoffverbundes aus Edelstahlkernschicht und Edelstahldeckschichten, wie auch die Münzrohlinge bzw. Münzplättchen keiner umweltproblematischen galvanischen Behandlung mehr bedürfen.

Die dort genannten Edelstähle X6Cr17 für die Kernschicht und X5CrNi1911 für die Plattierung sind beide stauchbar und damit für die Prägung geeignet und liegen auch bezüglich relevanter Festigkeitswerte so dicht beisammen, daß der Werkstoffverbund das Prägerelief trotz der hohen Kernfestigkeit gut aufnehmen kann.

Allerdings erfordern die gegenüber Münzrohlingen mit Kohlenstoffkern und Kupferplattierung wesentlich höheren Festigkeitswerte der Kernschicht höhere Kräfte beim Prägen der Münzen und vor allem hochverschleißfeste Prägestempel.

So stand die Problematik des Prägens bisher immer wieder einer weiten Verbreitung der Münzen aus Edelstahl entgegen. Die hohe 0,2 % Dehngrenze der für die Münzprägung in Frage kommenden rostfreien Stähle von mindestens 200 N/mm² für die beispielsweise die Austenite X5CrNi1810 (Deutsche Werkstoff-N° 1.4301) und X5CrNi1812 (Deutsche Werkstoff-N° 1.4303) sowie von mind. 250 N/mm² für den vorstehend genannten Ferrit X6Cr17 (Deutsche Werkstoff-N° 1.4016) erlaubt nur geringe Reliefhöhen, d.h. sehr flache Prägebilder, wobei die Prägehöhe die ursprüngliche Walzhöhe um nicht mehr als etwa max. 20 % überschreiten kann.

Neben den bisher nur erzielbaren geringen Reliefhöhen ist beim Prägen der rostfreien Stähle infolge ihrer hohen Härte der Stempelverschleiß sehr hoch. Während der ferritische Chromstahl X6Cr17 für die Münzprägung in weichgeglühtem Zustand bei Härtewerten zwischen 145 und 155 HV 30 liegen kann, ist bei Nichteisenmetallen eine sehr viel geringere Härte einstellbar, beispielsweise von 70 bis 85 HV 30 im Fall der Kupferlegierungen. Wenn auch die Standzeit der Prägestempel eine komplexe Funktion vielerlei Faktoren ist, in die auch Stempelwerkstoff, Stempelform, Hubgeschwindigkeit usw. eingehen, so ist dennoch die Härte des zu prägenden Materials eine der wesentlichsten Einflußgrößen.

Aufgabe der Erfindung ist es, eine kostengünstige plattierte Münze herzustellen, die nach dem Ausstanzen der Münzrohlinge auch bei erhöhten Anforderungen an die Beständigkeit der Münzen keine weiteren Nachbehandlungen der Kanten zur Einstellung einer hinreichenden Korrosionsbeständigkeit erfordert, Umwelt- und zugleich Recyclingfreundlichkeit aufweist, Nachteile bezüglich der Standfestigkeit der Prägewerkzeuge vermeidet und bezüglich der Reliefgestaltung mehr Freiheitsgrade bietet.

Erfindungsgemäß wird daher eine plattierte Münze mit den Merkmalen des Anspruchs 1 vorgeschlagen.

Überraschenderweise steht die große Differenz in den 0,2 % Dehngrenzen, also die Umformung des harten Edelstahles über ein relativ weiches Zwischenmedium, der Ausprägung des gewünschten Münzreliefs nicht entgegen, wie auch eine wesentliche Verschlechterung der Standzeiten der Prägewerkzeuge nicht festgestellt werden konnte. Offensichtlich wirken die weichen Deckschichten unter den Prägebedingungen auch wie ein Schmiermittel auf den entsprechenden Flanken des Reliefs.

Die sehr viel niedriger liegenden 0,2 %-Dehngrenzen der Nichteisenmetalle von beispielsweise nur max. 100 N/mm² für weichgeglühtes Kupfer, max. 160 N/mm² für weichgeglühtes Messing CuZn28 und max. 150 N/mm² für die weichgeglühte Zinnbronze CuSn2 ermöglichen dem Münzgestalter überraschenderweise ein sehr viel tieferes und plastischeres Prägebild trotz des Edelstahlkernes und mildern den Nachteil des flachen Prägebildes der rostfreien Stähle deutlich je nach Plattierdicke um rd. die Hälfte, erlauben also größere Reliefhöhen.

Diese Erkenntnis führte dazu, auch höherfeste Edelstähle zu verwenden und damit zu einer Weiterentwicklung, bei der dem Prägevorgang Münzrohlinge zugeführt werden, bei denen der Edelstahl, der im weich- oder lösungsgeglühten Zustand eine 0,2 % - Dehngrenze von mindestens 220 N/mm² aufweist, Kernschicht ist und bei denen die Kernschicht beidseits mit einer Auflage aus Nichteisenmetall versehen ist, dessen 0,2 % - Dehngrenze um mindestens 25 % unter der 0,2 % - Dehngrenze des Edelstahles der Kernschicht liegt.

Besonders wirtschaftlich werden die hergestellten Münzen, wenn die Kernschicht aus einem Edelstahl mit (in Masse-%) - (deutsche Werkstoff-Hr. 1.4003) -
C ≦ 0,03
Si ≦ 2,0
Mn 0,5 bis 1,50
P ≦ 0,045
S ≦0,030
N ≦ 0,03
Cr 10,5 bis 12,5
Ni 0,30 bis 1,0
Rest Eisen und erschmelzungsbedingte Beimengungen besteht.

In der Tat ist es mit den modernen Methoden der Stahlerzeugung heute möglich, die früher als teuer geltenden rostfreien Stähle in sehr preiswerter Weise herzustellen und - wie den vorstehend genannten Edelstahl, der unter die deutsche Werkstoffnummer 1.4003 fällt - bestimmten korrosiven Beanspruchungen anzupassen, d.h. auch sparsam mit den teuren Legierungsbestandteilen umzugehen.

Als Auflage werden Nichteisenmetallegierungen bevorzugt, die zu 60 bis 100 % aus Kupfer besteht. Kupferlegierungen die wenigstens 1 bis 2,5 Masse-% Zinn enthalten, sind ebenso geeignet, wie Messing.

Gerade Kupferlegierungen bieten die Möglichkeit farblicher Variationen, beispielsweise das rötliche Kupfer selbst oder das goldfarbene Messing. Zu beachten ist, daß die Auswahl solcher Farben zu einer Münze mit andersfarbigem Rand führt. Im Hinblick auf die vor allem in weniger wohlhabenden Län-dern häufig gewünschte deutliche Unterscheidbarkeit der Münzen im Hand-zu-Hand-Verkehr ist die Wahl zwischen Farben und Farbkontrasten durch die Erfindung bereitgestellt. Sie umfaßt Münzen mit rötlicher bis gelber Außenfarbe und weiß-bläulicher bis nahezu weißer Kante wie auch alternativ weitgehende Farbgleichheit bei weißer Außenfarbe und weiß-bläulicher bzw. nahezu weißer Kante. Demgegenüber führt der dem Stand der Technik entsprechende Kern aus Kohlenstoffstahl während des Gebrauchs der Münzen zu einer schmutzig-schwarzgrauen oder beispielsweise in tropischen Ländern sogar rostigen Kante.

Im weiteren ist es vorteilhaft, die Münzrohlinge aus einem Metallband eines Werkstoffverbundes aus der Edelstahl-Kernschicht und aus den beidseitigen, die Auflage bildenden, durch Walzplattieren aufgebrachten Außenschichten auszustanzen und ohne galvanische Nachbehandlung der Kanten dem Prägevorgang zuzuführen.

Nachfolgend sind Ausführungsbeispiele erfindungsgemäßer Münzen genannt:
1. Kupfer mit einer 0,2 % Dehngrenze von maximal 100 N/mm² auf austenitischem Stahl X5CrNi1810 (Deutsche Werkstoff-N° 1.4301) mit einer 0,2 % Dehngrenze von mindestens 200 N/mm²: Der Werkstoffverbund konnte in der Auflagedicke von 2 x 3 % Kupfer durch Walzplattieren hergestellt und zu Münzen verarbeitet werden. Münzflächen und -kanten weisen bei bestimmungsgemäßer Verwendung keinen nennenswerten Unterschied in der Korrosionsbeständigkeit auf. Der bläulich-weiße Farbton der Kanten hebt sich als Kontrast deutlich vom rötlichen Farbton der Flächen ab. Sowohl die Fabrikationsabfälle als auch die Münzen sind im Schrottkreislauf eines speziellen Edelstahl- und Nickelwerkstoff-Herstellers für die Erzeugung kupferhaltiger Sonderwerkstoffe wie X3CrCuMoTi2723 (Deutsche Werkstoff -N° 1.4503), NiCr20CuMo (Deutsche Werkstoff-N° 2.4660) und NiCr21Mo (Deutsche Werkstoff-N° 2.4858) rezyklierbar.
2. Messing CuZn28 mit einer 0,2 % Dehngrenze von maximal 160 N/mm² auf austenitischem Stahl X5CrNi1812 (Deutsche Werkstoff-N° 1.4303) mit einer 0,2 % Dehngrenze von mindestens 200 N/mm², regelmäßig aber mit 220 bis 250 N/mm²: Der Werkstoffverbund konnte in der Auflagedicke von 2 x 2,5 % Messing durch Walzplattieren hergestellt und zu Münzen verarbeitet werden. Münzflächen und -kanten weisen bei bestimmungsgemäßer Verwendung keinen nennenswerten Unterschied in der Beständigkeit auf. Der bläulich-weiße Farbton der Kanten hebt sich als Kontrast deutlich vom gelben Farbton der Flächen ab. Fabrikationsabfälle und Münzen lassen sich rezyklieren, so wie bisher für messingplattierte Münzen üblich.
3. Nickel 99,2 mit einer 0,2 % Dehngrenze von 120 bis 150 N/mm² auf ferritischem Chromstahl X2Cr11 (Deutsche Werkstoff-N° 1.4003) mit einer 0,2 % Dehngrenze von 220 bis 250 N/mm² oder X6Cr17 mit einer 0,2 % Dehngrenze von 275 bis 340 N/mm² (Deutsche Werkstoff-H° 1.4016): Der Werkstoffverbund läßt sich in den Auflagedicken von 2 x 2,5 %, 2 x 5 % als auch 2 x 10 % Nickel ohne weiteres durch Walzplattieren herstellen und zu Münzen und Wertmarken verarbeiten. Zwischen den Münzflächen und den -kanten besteht bei bestimmungsgemäßer Verwendung der Münzen kein nennenswerter Unterschied in der Beständigkeit. Münzflächen und -kanten sind weitgehend farbgleich. Sowohl die in großem Umfang als Stanzgatter anfallenden Fabrikationsabfälle als auch die Münzen sind problemlos im Edelstahl-Schrottkreis-lauf rezyklierbar.

Im Hinblick auf die Unterscheidbarkeit in Münzprüfgeräten kann der Werkstoffverbund als weitere bedeutende Maßnahme also so gewählt werden, daß er entweder nicht ferromagnetisch ist (Ausführungsbeispiele 1 und 2), oder daß er ferromagnetisch ist (Ausführungsbeispiel 3); während der dem Stand der Technik entsprechende Kern aus Kohlenstoffstahl in jedem Fall zu Ferromagnetismus des Werkstoffverbundes führt.

Auch bezüglich der Wahl des Prägereliefs läßt die Erfindung einen breiten Spielraum una ist besonders vorteilhaft für Münzen, bei denen das Prägerelief tafelbergartig gestaltet ist.

Bezüglich des verfahrenstechnischen Ablaufes und weitgehend auch bezüglich der einzusetzenden Vorrichtungen kann traditionell verfahren werden. So folgt bei der Herstellung der Münzrohlinge dem Plattieren und Ausstanzen der ebenen Münzplättchen fast regelmäßig das sogenannte Rändeln, bei dem ein umlaufender Rand kalt angeformt wird. Die in ihrer Grundform damit fertigen Münzrohlinge werden dann weichgeglüht und schließlich einer Prägeanstalt zugeführt.

## Patentansprüche

1. Plattierte Münze, die zu mindestens 80 Masse-% aus chromhaltigem Edelstahl mit ferritischer, austenitischer oder Duplex-Struktur besteht,
**dadurch gekennzeichnet**, daß die Kernschicht aus einem Edelstahl, der bei Raumtemperatur im weich- oder lösungsgeglühten Zustand eine 0,2 %-Dehngrenze von mindestens 200 N/mm² aufweist, beidseits mit einer Auflage aus Nichteisenmetall versehen ist, dessen 0,2 %-Dehngrenze um mindestens 40 N/mm² unter der des Edelstahls der Kernschicht liegt.

2. Münze nach Anspruch 1, bei der die Kernschicht aus einem Edelstahl, der im weich- oder lösungsgeglühten Zustand eine 0,2 %-Dehngrenze von mindestens 220 N/mm² aufweist, beidseitig mit einer Auflage aus Nichteisenmetall versehen ist, dessen 0,2 %-Dehngrenze mindestens 25 % unter der des Edelstahls der Kernschicht liegt.

3. Münze nach Anspruch 1 oder 2,
**dadurch gekennzeichnet**, daß die Kernschicht aus einem Edelstahl aus (in Masse-%)
C ≦ 0,03
Si ≦ 2,0
Mn 0,5 bis 1,50
P ≦ 0,045
S ≦ 0,030
N ≦ 0,03
Cr 10,5 bis 12,5
Ni 0,30 bis 1,0
Rest Eisen und erschmelzungsbedingte Beimengungen besteht.

4. Münze nach einem der Ansprüche 1 bis 3,
**dadurch gekennzeichnet**, daß die Auflage eine Nichteisenmetallegierung mit 60 bis 100 Masse-% Kupfer ist.

5. Münze nach Anspruch 4,
**dadurch gekennzeichnet**, daß die Auflage aus einer Kupferlegierung besteht, die 1 bis 2,5 Masse-% Zinn enthält.

6. Münze nach Anspruch 4 oder 5,
**dadurch gekennzeichnet**, daß die Auflage aus Messing ist.

7. Verfahren zur Herstellung von Münzen, die zu mindestens 80 Masse-% aus chromhaltigem Edelstahl mit ferritischer, austenitischer oder Duplex-Struktur bestehen, **dadurch gekennzeichnet**, daß aus einem Metallband eines Werkstoffverbundes aus einer Edelstahl-Kernschicht und aus den die Auflage bildenden, durch Walzplattieren beidseitg aufgebrachten Außenschichten Münzrohlinge ausgestanzt und ohne galvanische Randbeschichtung dem Prägevorgang zugeführt werden.
